Europäisches Patentamt

(19) European Patent Office

Office européen des brevets

(11) Veröffentlichungsnummer: **0 086 366**
**B1**

(12) **EUROPÄISCHE PATENTSCHRIFT**

(45) Veröffentlichungstag der Patentschrift:
30.04.86

(21) Anmeldenummer: **83100660.6**

(22) Anmeldetag: **26.01.83**

(51) Int. Cl.⁴: **F 24 J 2/20**

(54) Dacheindeckung od. dgl. Bauelement für den Austausch von Wärmeenergie mit der Umwelt, insbesondere als Sonnenkollektor.

(30) Priorität: 16.02.82 ES 509637

(43) Veröffentlichungstag der Anmeldung:
24.08.83 Patentblatt 83/34

(45) Bekanntmachung des Hinweises auf die Patenterteilung:
30.04.86 Patentblatt 86/18

(84) Benannte Vertragsstaaten:
AT CH DE FR GB IT LI

(56) Entgegenhaltungen:
DE - A - 2 510 321
FR - A - 2 315 671
FR - A - 2 455 146
US - A - 4 019 494
US - A - 4 271 823
US - A - 4 296 740
US - A - 4 296 741

(73) Patentinhaber: Lehmann, Klaus, Königstrasse 42,
D-4100 Duisburg 17 (DE)

(72) Erfinder: Lehmann, Klaus, Königstrasse 42,
D-4100 Duisburg 17 (DE)

(74) Vertreter: Grättinger, Günter et al, Grättinger & Partner
Patentanwälte Almeidaweg 35 Postfach 16 49,
D-8130 Starnberg (DE)

## Beschreibung

Die Erfindung bezieht sich auf eine Dacheindeckung oder dergleichen Bauelement für den Austausch von Wärmeenergie mit der Umwelt, insbesondere als Sonnenkollektor, wobei das Bauelement im wesentlichen die Struktur einer extrudierfähigen, mehrlagigen Hohlkammerplatte mit lichtdurchlässiger Deckschicht aufweist, und wobei die offenen Enden wenigstens einer Plattenlage an Sammelkanäle angeschlossen sind, welche Luftkanäle sind.

Es ist ein Sonnenkollektor der eingangs genannten Art bekannt (US-A-4271 823), bei dem die Kollektorplatte eine obere Isolierzone und eine untere wärmeabsorbierenden Zone umfaßt. Durch diese Zonen erstrecken sich längliche, durch Rippen voneinander getrennte Kanäle. Die Kanäle der wärmeabsorbierenden unteren Zone sind gleichmäßig von Luft oder einem anderen Fluid durchströmt und stehen mit einem Sammelkanal in Verbindung. Die Kanäle der oberen lichtdurchlässigen Isolierzone bilden Hohlräume deren Enden mittels dichtender Blockierwände gegenüber der Umgebung abgeschlossen sind, sodaß in den Kanälen keinerlei Luftzirkulation stattfindet. Das Strömungsmedium zirkuliert also nur in den Kanälen der unteren, wärmeabsorbierenden Zone wohingegen die darüberliegende Isolierzone gleichsam aus Luftkammern besteht, die als Insolationsschicht wirken.

Demgegenüber liegt der vorliegenden Erfindung die Aufgabe zugrunde, eine Dacheindeckung der im Oberbegriff von Patentanspruch 1 genannten Art derart zu verbessern, daß im Kollektorbetrieb ein rasches Aufheizen des Strömungsmediums bei hoher Wärmeausnutzung erzielbar ist und daß neben dem Kollektorbetrieb weitere Betriebsarten möglich sind.

Diese Aufgabe wird erfindungsgemäß dadurch gelöst, daß wenigstens zwei Kanalsysteme vorhanden sind, welche beide als Luftkanäle ausgebildet sind und mit unterschiedlichen Plattenlagen kommunizieren, und daß die Kanalsysteme je nach Betriebsart in getrennten Kreisläufen, in Serie oder parallel schaltbar sind.

Durch das Strömungsmedium Luft, welches durch die erfindungsgemäße Dacheindeckung ausschließlich verwendet wird, entfallen von vorneherein alle Dichtungsprobleme, welche die bekannten Systeme mit flüssigem Wärmemedium aufwendig und anfällig machen. Gleichzeitig verringert sich der Herstellungsaufwand dadurch, daß keine doppelten Leitungsführungen erforderlich sind bzw. durch den Wegfall teurer Absorberflächenelemente.

Das Medium Luft bietet darüberhinaus den Vorteil, daß es sich sehr rasch aufheizt. Zur Erwärmung von 1 m³ Luft um 1°C werden nur 0,25 Kcal benötigt, während zur Erwärmung von 1 m³ Wasser um 1° C sogar 1.000 Kcal notwendig sind.

Während bei Wasser als Wärmeträgermedium die Verweilzeit in den Kollektoren bzw. Absorbern lange ist, bis die für den Wärmeaustausch gewünschte Temperatur erreicht ist, entfallen die während der Verweilzeit in Kauf zu nehmenden Abstrahlungsverluste bei einem reinen Luftsystem, wie es die Erfindung vorschlägt, weitgehendst. Damit ergibt sich die vorteilhafte Möglichkeit der Abkehr von der bei Flüssigkeitssystemen erforderlichen diskontinuierlichen Betriebsweise.

Im Rahmen des erfindungsgemäßen Vorschlags ist ferner von besonderer Bedeutung, daß wenigstens zwei Kanalsysteme vorhanden sind, welche die Verbindung zu den Wärmeaustauschern herstellen. Diese Kanalsysteme umfassen jeweils an unterschiedliche Plattenlagen der Hohlkammerplatten angeschlossene Sammelkanäle. Bei der bevorzugten Ausführungsform mit zwei Plattenlagen sind somit insgesamt zwei Kanalsysteme erforderlich, welche an die offenen Enden der Hohlkammern jeder Plattenlage angeschlossen sind.

Die Funktionsweise jeder Plattenlage hängt dabei von der jeweiligen Betriebsart ab.

Am Beispiel einer doppelten Hohlkammerplatte erläutert, ermöglicht die vorliegende Erfindung die folgenden Betriebsarten:

a) als Sonnenkollektor arbeitet die erfindungsgemäße Dacheindeckung wenn die beiden Kanalsysteme getrennt sind; die obere Plattenlage, welche durch die lichtdurchlässige Deckschicht abgeschlossen ist, wird dabei entweder vollständig verschlossen, wobei sich in den Hohlkammern statische Luftkissen ausbilden; aber auch schon das Weglassen jeder zwangsweisen Durchströmung ergibt einen vergleichbaren Effekt; das zweite Kanalsystem ist an die untere Plattenlage, welche nach oben hin mit der Absorberfläche abschließt, angeschlossen; die Hohlkammern der unteren Plattenlage werden zwangsdurchströmt, wobei der Luftstrom einen Wärmetauscherkreislauf durchläuft.

b) In einer Variante des Solarkollektorbetriebs können die beiden Plattenlagen parallel durchströmt werden; diese Betriebsart ist dann von Intresse, wenn ein besonders hoher Luftdurchsatz bei geringerer Temperaturdifferenz gewünscht wird; bei besonders hohen Außentemperaturen kann durch diese Betriebsart die Temperaturdifferenz nach unten geregelt werden.

c) Die erfindungsgemäße Vorrichtung kann auch als Kühlvorrichtung betrieben werden, z.B. zum Kühlen von Wohnhäusern in besonders heißen Klimazonen. Erfindungsgemäß werden hierbei die beiden Plattenlagen der doppelten Hohlkammerplatte miteinander verbunden, d.h. in Serie durchströmt. Mittels eines Gebläses wird die Luft in einem Kreislauf zwischen den Hohlkammern der oberen Plattenlage und der unteren Plattenlage gefördert. Unter bestimmten Voraussetzungen, z.B. bei klarem Nachthimmel, kommt es dabei zur Energieabstrahlung in die Umgebung. Die Luft kühlt sich mit jedem durchlaufenden Strömungskreislauf immer mehr ab. Zu Kühlzwecken wird ein gewisser Teil der abgekühlten Luft dem Kreislauf entnommen und ein entsprechender Anteil an warmer Außenluft in das System eingeleitet. Mit der abgekühlten Luft kann beispielsweise ein Kältespeicher betrieben werden, aus welchem tagsüber, wenn die Dacheindeckung beispielsweise wieder als Kollektor eingesetzt wird, Energie zur Kühlung von Räumen entnehmbar ist.

d) Schließlich kann die doppelte Hohlkammerplatte auch in reinem Absorberbetrieb arbeiten. Hier geht es darum, aus der Umgebung Wärmeenergie abzuleiten, z.B. aus Regen, aus feuchter Luft, aus Schnee oder aus gefrierendem Niederschlag. Dabei wird die beim Phasenwechsel von Dampf in Wasser oder von Wasser in Eis freiwerdende Wärmeenergie abgezogen, was dadurch geschieht, daß durch die Hohlkammern der oberen Plattenlage Luft umgewälzt wird, die sich an der Deckschicht erwärmt, während die Hohlkammern der unteren Plattenlage nicht durchströmt werden, so daß sich dort ein statisches Luftpolster ausbildet. Die erwärmte Luft aus der oberen Plattenlage wird beispielsweise einer Wärmepumpe oder einem Luft-Wasser-Wärmetauscher zugeführt.

Eine besonders bevorzugte Ausführungsform der Erfindung sieht vor, daß, wie bereits ausgeführt, die gesamte Hohlkammerplatte zwei Plattenlagen umfaßt, welche zusammen eine Deckschicht, eine Zwischenschicht und eine Bodenschicht mit dazwischen angeordneten Wandstegen bilden, und daß sie ganz oder mit Ausnahme der Deckschicht durch Koextrudieren hergestellt ist. Dabei werden die verschiedenen Materialien für die Deckschicht und die übrigen Plattenteile in einer Extrusionsdüse zusammengebracht, so daß eine kompakte Struktur in Form der erfindungsgemäßen Dacheindeckung entsteht. Möglich ist selbstverständlich auch die Herstellung von Teilquerschnitten durch Extrudieren, wobei die Teilquerschnitte nachträglich miteinander verbunden werden. Ein geeigneter Werkstoff für die hochlichtdurchlässige Deckschicht ist ein transparentes bis etwa 150° C temperaturbeständiges Polykarbonat; ein solches ist im Handel erhältlich z.B. unter dem Namen Macrolon ® oder Lexan.®. Ein geeigneter Werkstoff für die restlichen Plattenteile insbesondere die Absorberflächen, ist ebenfalls Polycarbonat mit einem Anteil an Glasfasern und einem Farbzusatz der die gewünschte Schwarzfärbung ergibt. Bei der Wahl geeigneter Werkstoffe ist besonderes Augenmerk auf eine möglichst niedrige Wärmedehnung aber eine gute Wärmeleitung zu richten.

Eine besonders vorteilhafte Ausnutzung der Absorberflächen, gebildet durch die Zwischenschicht der doppelten Hohlkammerplatte und die zur Deckschicht hin anschließenden Wandstege, ergibt sich durch den weiteren Vorschlag der Erfindung, daß die Deckschicht jeweils zwischen zwei Wandstegen in gleichartige Längenabschnitte gegliedert ist, welche jeweils etwa die querschnittsform einer Zerstreuungslinse aufweisen. Der mittlere, dünnwandige Abschnitt der Zerstreuungslinse ist dabei etwas gestreckt; entscheidend ist jedoch die Verdickung der Randbereiche der Deckschicht, bezogen auf die querrichtung jedes Längenabschnitts; dadurch wird erreicht, daß auch bei sehr flachem Einfall der Sonnenstrahlen eine hohe Strahlenausbeute durch geeignete Lichtbrechung und -beugung erzielbar ist.

Diese Wirkung wird besonders noch dadurch erhöht, daß die Wandstege zwischen der Zwischenschicht und der Deckschicht abwechselnd schräg sind, so daß jeweils zwei benachbarte an der Deckschicht zusammenlaufen, derart, daß zwischen diesen Wandstegen und den zugeordneten Wandstegen der nächsten Plattenlage weitere, sich über beide Plattenlagen erstreckende, kanalartige Hohlkammern gebildet sind.

Durch diese Schräglage der Wandstege, welche die Deckschicht mit der Zischenschicht verbinden, in Zusammenwirkung mit der speziellen querschnittsform der Deckschicht erübrigt sich bei der erfindungsgemäßen Dacheindeckung deren Neigungsanpassung an den jeweiligen Sonnenstand bzw. die Dacheindeckung ist in ihrer Wirkung vom Sonnenstand weitgehend unabhängig.

Für den Kollektorbetrieb ist es besonders vorteilhaft, wenn die Zwischenschicht und deren mit der Deckschicht verbundene Wandstege auf ihrer von der Deckschicht abgewandten Seite eine vergrößerte Oberfläche, z.B. Rippen oder Noppen aufweisen. Eine solche Ausbildung begünstigt den Wärmeübergang aus den Hohlkammern der oberen Plattenlage in die Hohlkammern der unteren Plattenlage.

Besonders vorteilhaft gelöst ist bei der erfindungsgemäßen Dacheindeckung die Abdichtung gegen Witterungseinflüsse, insbesonderere Eindringen von Nässe. Hierzu ist erfindungsgemäß vorgesehen, daß die Deckschicht eines Bauelements mehrere an einem Längsrand überstehende Abdecklappen mit parallelen Dichtlippen an der Unterseite, am anderen Längsrand in der Oberseite mehrere parallele Rippen aufweist, in welche die Dichtlippen des Abdecklappens eines anschließenden Bauelements eingreifen.

Der besondere Vorteil der erfindungsgemäßen Dacheindeckung gegenüber den bisher bekannten Kollektor- und Absorberplatten liegt darin, daß die im Kollektorbetrieb zu erwärmende, durch die Hohlkammern der unteren Plattenlage geführte Luft mit praktisch vernachlässigbaren Wärmeverlusten rasch aufgeheizt werden kann. Die Hohlkammern der unteren Plattenlage sind gewissermaßen dreifach abgeschirmt durch die Zwischenschicht, das daraufliegende Luftpolster und die darüber befindliche lichtdurchlässige Deckschicht. Die erfindungsgemäße Dacheindeckung ermöglicht dadurch einen praktisch unterbrechungsfreien, d.h. kontinuierlichen Betrieb, wobei selbst bei Unterbrechung der Sonnenstrahlung, z.B. durch vorüberziehende Wolken, eine spürbare Beeinträchtigung der Lufterwärmung nicht eintritt. Wegen der geringen, zur Luftaufheizung benötigten Energiemenge arbeitet der erfindungsgemäße Kollektor auch bei nur diffusem Licht einwandfrei.

Die erfindungsgemäße Dacheindeckung kann selbstverständlich auch unabhängig von Dachkonstruktionen im Freien aufgestellt werden; als Dacheindeckung zeichnet sie sich durch eine sehr ansprechende Formgebung, eine hohe Stabilität, einwandfreie Begehbarkeit und Abdichtung gegenüber Witterungseinflüssen aus. Darüberhinaus besitzt die erfindungsgemäße Dacheindeckung infolge der Struktur der mehrlagigen Hohlkammerplatte einen hohen Isolierwert. Dabei wird jede Kondensatbildung unter der Dacheindeckung vermieden.

Im folgenden werden einige Ausführungsformen, der Erfindung anhand der Zeichnung näher erläutert. Es zeigt

Fig. 1 einen Abschnitt der Hohlkammerplatte in perspektivischer Darstellung,

Fig. 2 einen schematischen Querschnitt durch die Deckschicht im Bereich eines ihrer Längenabschnitte,

Fig. 3 einen Querschnitt durch eine abgewandelte Ausführungsform einer montierten Hohlkammerplatte,

Fig. 4 einen Längsschnitt durch die Hohlkammerplatte im Endbereich,

Fig. 5 einen Schnitt gem. V-V der Fig. 4 und

Fig. 6 einen Schnitt gem. VI-VI der Fig. 4.

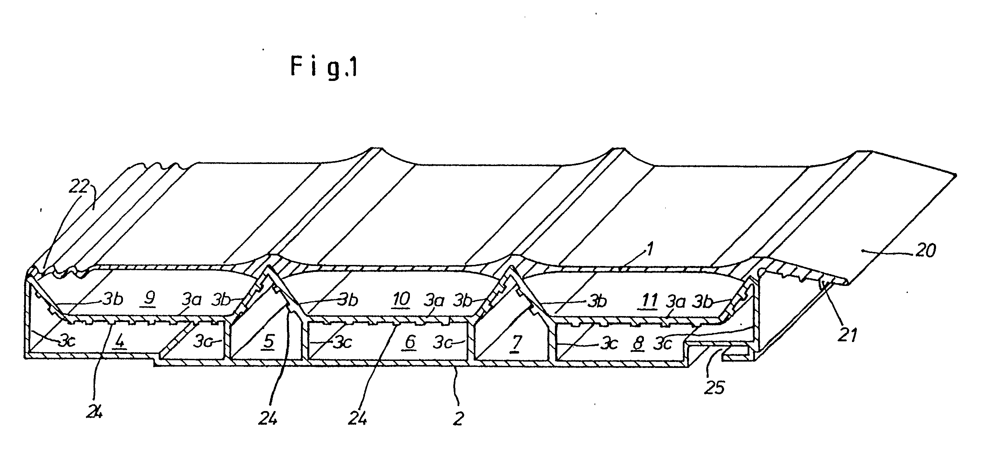

Fig. 1 zeigt eine zweilagige bzw. doppelte Hohlkammerplatte, bestehend aus Deckschicht 1, Bodenschicht 2 und Zwischenschicht 3a sowie zwischen diesen Schichten verlaufenden Wandstegen 3b, 3c. Die Deckschicht 1 ist aus hochlichtdurchlässigem Kunststoff gefertigt, während die übrigen Schichten bzw. Stege der Hohlkammerplate aus schwarzgefärbtem Kunststoff bestehen; ein geeigneter Kunststoff ist Polycarbonat, dessen Zusammensetzung so gewählt wird daß es ausreichend temperaturbeständig, wärmeleitfähig und schlagfest ist.

Die Zwischenschicht 3a und die zwischen dieser und der Deckschicht 1 angeordneten Wandstege 3b bilden die schwarze Absorptionsfläche, welche die durch die lichtdurchlässige Deckschicht 1 einfallende Sonnenstrahlung in Wärme umwandelt.

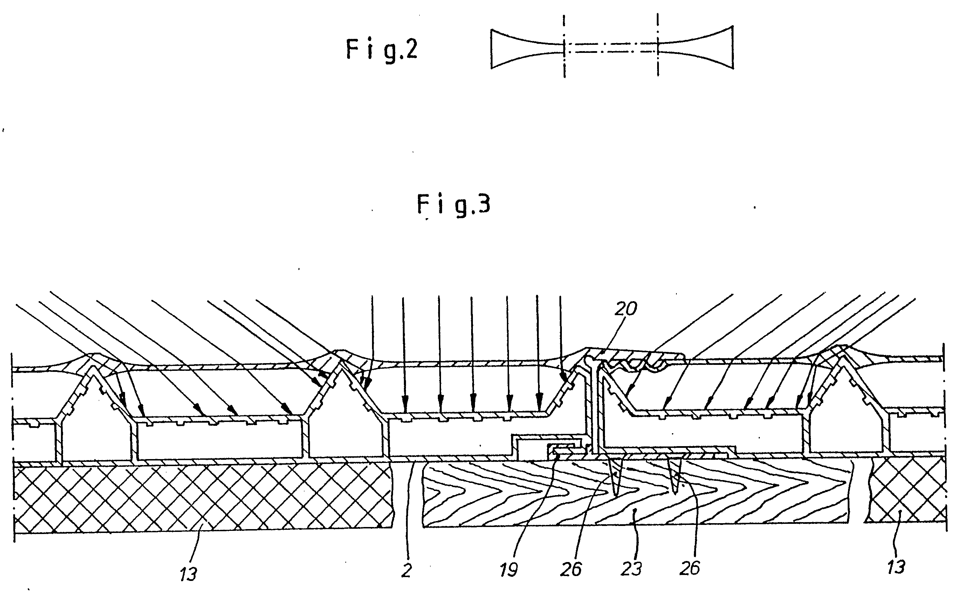

Gem. Fig. 2 entspricht der querschnitt jedes Längenabschnitts der Deckschicht 1 einer Zerstreuungslinse, welche in ihrem mittleren, strichpunktiert dargestellten Bereich entsprechend der Breite der Längenabschnitte gestreckt ist. Dadurch wird erreicht, daß die unter verschiedenem Winkel einfallenden Sonnenstrahlen, auch wenn der Einfallswinkel sehr flach ist, so gebeugt bzw. gebrochen werden, daß eine möglichst gleichmäßige Strahlenverteilung auf die Absorptionsfläche erzielt wird. Wesentlich ist dabei, daß durch die Wirkung der Deckschicht als Zerstreuungslinse flach auf die Deckschicht auftreffende Sonnenstrahlen nach innen, also in Richtung auf die Absorptionsfläche, gebeugt und nicht reflektiert werden.

Im Kollektorbetrieb der Hohlkammerplatte wird die zu erwärmende Luft durch die Hohlkammern 4, 5, 6, 7 und 8 der unteren Plattenlage durchgesaugt bzw. durchgedrückt und erwärmt sich somit an der Rückseite der hoch wärmeleitfähigen Zwischenschicht 3a bzw. der damit verbundenen Wandstege 3b.

Anders als die Hohlkammern der unteren Plattenlage sind die Hohlkammern 9, 10 und 11 der oberen Plattenlage nicht durchströmt, d.h. in diesen Hohlkammern 9, 10, 11 findet keine Luftzirkulation statt. Die Hohlkammern 9, 10, 11 der oberen Plattenlage können an ihren Enden entweder verschlossen sein oder aber in einen abgeschlossenen Sammelkanal münden. Im Kollektorbetrieb wirkt somit das statische Luftpolster in den Kammern 9, 10, 11 der oberen Plattenlage als Isolationsschicht. Hinzu kommt die isolierende Wirkung der Deckschicht 1 sowie der die Absorptionsflächen bildenden Schichten bzw. Stege. Besonders die Deckschicht 1 wirkt als Schutz gegen Abstrahlung.

Auf ihrer Rückseite besitzen die Zwischenschicht 3a und die zugehörigen Wandstege 3b Rippen 24 zur Verbesserung des Wärmedurchgangs. Anstelle der Rippen 24 sind auch andere Formen einer einseitigen Oberflächenvergrößerung denkbar, wie durch Noppen od. dgl.

Eine Nut 25 in der Bodenschicht 2 dient zum Einhängen der Hohlkammerplatte in entsprechende Halteprofile, welche z.B. auf der Dachlattung aufgenagelt sind. Durch diese Halteprofile wird die Hohlkammerplatte nur einseitig befestigt, so daß sie sich unter Wärmeeinwirkung ungehindert dehnen kann.

Die Deckschicht 1 der Hohlkammerplatte besitzt an einem Längsrand einen überstehenden Abdecklappen 20, der an der Unterseite mit parallelen Dichtlippen 21 versehen ist. Unter diesen Abdecklappen 20 wird die nächste Hohlkammerplatte geschoben (vgl. Fig. 3), so daß die Dichtlippen 21 in Rillen 22 eingreifen, welche am jeweils gegenüberliegenden Rand der Deckschicht 1 einer Hohlkammerplatte vorgesehen sind.

Wie man besser aus Fig. 3 erkennt, trägt die Hohlkammerplatte an ihrer Rückseite eine Isolierung 13, welche den Raum zwischen den Dachlatten 23 füllt. Gem. Fig. 3 ist auch das bereits erwähnte Halteprofil 19 dargestellt, welches mittels Schrauben 26 auf den Dachlatten befestigt ist.

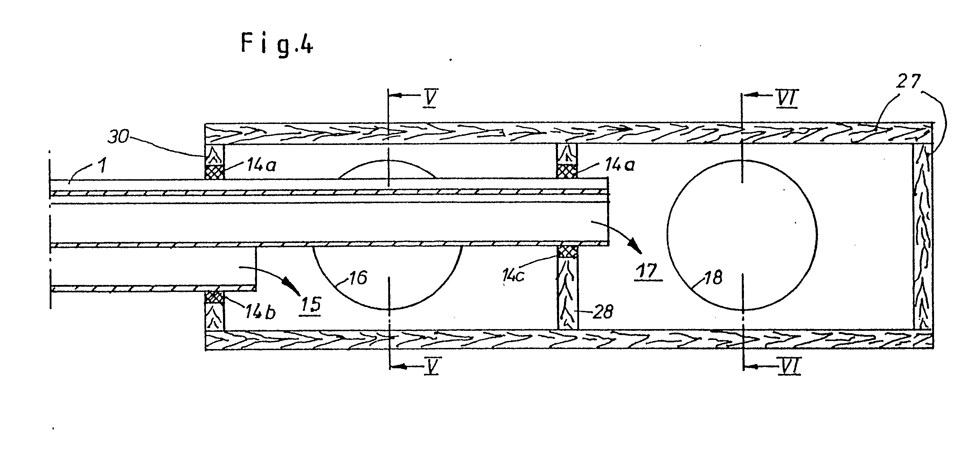

Wie bereits ausgeführt, werden im Kollektorbebieb die Hohlkammern 4, 5, 6, 7, 8 der unteren Plattenlage von der aufzuheizenden Luft durchströmt. Fig. 4 zeigt, wie zu diesem Zweck die genannten, Warmluft führenden Hohlkammern von den als statische Luftpolster wirkenden Hohlkammern 9, 10, 11 der oberen Plattenlage getrennt sind. Die aufgeheizte Luft wird aus der unteren Plattenlage in den Sammelkanal 15 gesaugt und von dort durch die Öffnung 16 an einen Wärmetauscher weitergeleitet. Die Hohlkammern der oberen Plattenlage münden in einen äußeren Sammelkanal 17, werden aber im Kollektorbetrieb nicht abgesaugt; denkbar ist auch ein (nicht gezeichneter) Verschlußstopfen am Ende der Hohlkammern 9, 10, 11 der oberen Plattenlage.

Bei Benutzung der Dacheindeckung als Absorber, welcher der Umgebung Energie entzieht, werden die Hohlkammern 9, 10 und 11 der oberen Plattenlage zwangsweise durchströmt. Die Luft erwärmt sich dabei an der Unterseite der oberen Deckschicht, durch welche von außen nach innen Wärme abgeleitet wird. Hier wird die durch die Hohlkammern der oberen Plattenlage gesaugte und erwärmte Luft in dem äußeren Sammelkanal 17 gesammelt und durch dessen Öffnung 18 an eine Wärmepumpe oder über einen Luft-Wasser-Wärmetauscher an einen Latentspeicher weitergeleitet, aus welchem sich eine Wärmepumpe bedient. Im Absorberbetrieb besteht in den Hohlkammern 4, 5, 6, 7, 8 der unteren Plattenlage ein statisches Luftpolster.

In einer weiteren Betriebsart arbeitet die Dacheindeckung als Kühlvorrichtung für Wohnhäuser u. dgl. Es ist bekannt, daß bei klarem Nachthimmel schwarze Absorberflächen erhebliche Energiemengen in die Umwelt abstrahlen. Im Kühlbetrieb werden die Kammern beider Plattenlagen miteinander verbunden, so daß die Luft in einem Kreislauf zwischen den Hohlkammern der oberen und der unteren Plattenlage gebracht wird. Die Luft kühlt sich hier beim Durchgang durch die Hohlkammern der oberen Plattenlage ab. Ein gewisser Teil der abgekühlten Luft wird dem Kreislauf entnommen, wobei eine entsprechende Menge warmer Außenluft in den Luftkreislauf eingeleitet wird.

Die Hohlkammerplatten können entweder aus Einzelelementen zusammengesteckt werden oder im sog. Koextrusionsverfahren kompakt hergestellt werden. Möglich ist auch ein teilweises Extrudieren von Bauteilen, z.B. eines äußeren Kastenprofils und getrennt davon der Absorber-Einsatzteile. Beide Bauteile können dann nachträglich ineinandergeschoben und miteinander verbunden werden.

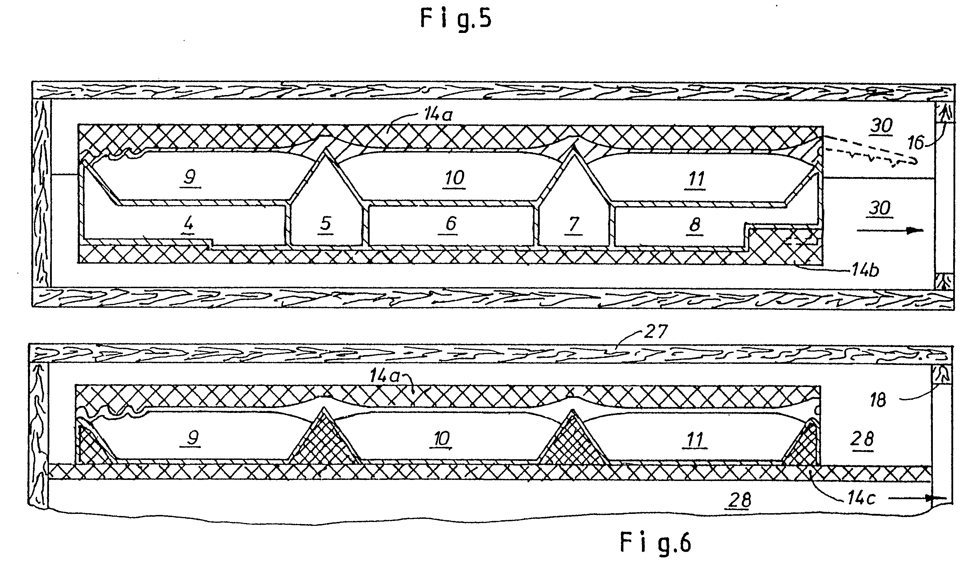

In den Schnittdarstellungen gem. den Fig. 5 und 6 ist der Durchtritt der Hohlkammerplatte durch die Seitenwand 30 des Gehäuses 27 der beiden Sammelkanäle 15, 17 bzw. der Durchtritt der oberen Plattenlage der Hohlkammerplatte durch die Trennwand 28 zwischen den beiden Sammelkanäle 15, 17 dargestellt. Im Bereich der Durchtrittsöffnungen sind jeweils Dichtungsteile 14a, 14b, 14c eingesetzt.

## Patentansprüche

1. Dacheindeckung od. dgl. Bauelement für den Austausch von Wärmeenergie mit der Umwelt, insbesondere als Sonnenkollektor, wobei das Bauelement im wesentlichen die Struktur einer extrudierfähigen, mehrlagigen Hohlkammerplatte mit lichtdurchlässiger Deckschicht aufweist, und wobei die offenen Enden wenigstens einer Plattenlage an Sammelkanäle (15, 17) angeschlossen sind, welche Luftkanäle sind,
dadurch gekennzeichnet,
daß wenigstens zwei Kanalsysteme (15, 17) vorhanden sind, welche beide als Luftkanäle ausgebildet sind und mit unterschiedlichen Plattenlagen kommunizieren, und daß die Kanalsysteme (15, 17) je nach Betriebsart in getrennten Kreisläufen, in Serie oder Parallel schaltbar sind.

2. Dacheindeckung nach Anspruch 1, bei welcher die gesamte Hohlkammerplatte wenigstens zwei Plattenlagen umfaßt, die zusammen eine Deckschicht, (1) eine Zwischenschicht (3a) und eine Bodenschicht (2) mit dazwischen angeordneten Wandstegen (3b, 3c) bilden,
dadurch gekennzeichnet,
daß die Deckschicht (1) jeweils zwischen zwei Wandstegen (3b) in gleichartige Längenabschnitte gegliedert ist, welche jeweils etwa die Querschnittsform einer Zerstreuungslinse aufweisen.

3. Dacheindeckung nach Anspruch 1 oder 2, bei welcher zumindest die an die Unterseite der Deckschicht (1) anschließenden Wandstege (3b, 3c) abwechselnd schräg sind, so daß jeweils zwei benachbarte an der Deckschicht (1) zusammen laufen,
dadurch gekennzeichnet,
daß zwischen diesen zusammenlaufenden Wandstegen (3b) und den zugeordneten Wandstegen (3c) der nächsten Plattenlage weitere, sich über beide Plattenlagen erstreckende kanalartige Hohlkammern (5, 7) gebildet sind.

4. Dacheindeckung nach einem der Ansprüche 1 bis 3,
dadurch gekennzeichnet,
daß die Zwischenschicht (3a) und deren mit der Deckschicht (1) verbundenen Wandstege (3b) auf ihrer von der Deckschicht (1) abgewandten Seite eine vergrößerte Oberfläche, z.B. Rippen (24) oder Noppen aufweisen.

5. Dacheindeckung nach einem der Ansprüche 1 bis 4,
dadurch gekennzeichnet,
daß die Deckschicht (1) eines Bauelements an einem Längsrand einen überstehenden Abdecklappen (20) mit parallelen Dichtlippen (21) an der Unterseite und am anderen Längsrand in der Oberseite mehrere parallele Rillen (22) aufweist, in welche die Dichtlippen (21) des Abdecklappens (20) eines anschließenden Bauelements eingreifen.

## Claims

1. A roof covering or a similar construction element for exchanging heat energy with the environment, especially as a solar collector, where the construction element is extrudable and has multiple tiers of hollow chambers with a transparent cover layer (1), the open ends of at least one tier being connected to collection channels (15, 17) which are air channels
characterized in
that there are at least two channel systems (15 or 17) both being air channels, which communicate with different tiers and the channel systems (15,-17) can be switched into separate circulations, series or parallel, depending on the desired operating mode.

2. A roof covering according to claim 1, in which the entire hollow chambered element comprises at least two tiers which together form a cover layer (1) an intermediate layer (3a) and a bottom layer (2) with wall ridges (3b, 3c) disposed in between,
characterized in
that the cover layer (1) is structured in similar longitudinal sections each extending between wall ridges (3b) and having approximately the cross section of a concave lens.

3. A roof covering according to claim 1 or 2, in which at least the wall ridges (3b,3c) which connect to the lower side of the cover layer (1) are alternately slanted and converge at the cover layer (1),
characterized in
that between the converging wall ridges (3b) and the associated wall ridges (3c) of the next tier, further channel-like hollow chambers (5,7) are formed which extend over both tiers.

4. A roof covering according to one of claims 1 through 3,
characterized in
that the intermediate layer (3a) and its wall ridges (3b) which are connected with the cover layer (1) have an enlarged surface, e.g. ribs (24) or nubs on the side that is turned away from the cover layer (1).

5. A roof covering according to one of claims 1 through 4,
characterized in
that the cover layer (1) of a construction element has a protruding covering tab (20) with parallel sealing lips (21) at its lower side on lone longitudinal edge, and also has several parallel grooves (22) on the upper side on the other longitudinal edge, with the sealing lips (21) of the covering tab (20) of an adjoining construction element engaging said grooves (22).

.

## Revendications

1. Couverture de toit ou élément de construction similaire pour l'échange d'énergie thermique avec l'environnement, en particulier en tant que collecteur solaire, l'élément de construction présentant essentiellement la structure d'une plaque pouvant être extrudée à chambres creuses à plusieurs couches avec couche de recouvrement transparente (1) et les extrémités ouvertes d'au moins une couche de plaque étant raccordées à des canaux collecteurs (15 17) qui sont des canaux à air, caractérisée par le fait qu'il existe au moins deux systèmes de canaux (15, 17) qui sont tous deux conçus sous forme de canaux à air et communiquent avec différentes couches de plaque et que les systèmes de canaux (15, 17), selon le mode de fonctionnement, peuvent être branchés dans des circuits séparés, en série ou en parallèle.

2. Couverture de toit selon la revendication 1, dans laquelle l'ensemble de la plaque à chambres creuses comprend au moins deux couches de plaque qui forment ensemble une couche de recouvrement (1), une couche intermé- diaire (30) et une couche de fond (2) avec traverses de paroi (3b, 3c) disposées entre elles, caractérisée par le fait que la couche de recouvrement (1) est chaque fois divisée, entre deux traverses de paroi (3b),en tronçons de longueur similaires qui présentent chaque fois à peu près la forme de section d'une lentille divergente.

3. Couverture de toit selon l'une des revendications 1 et 2, dans laquelle au moins les traverses de paroi (3b, 3c) se raccordant à la face inférieure de la couche de recouvrement (1) sont obliques de façon alternée, de sorte que deux traverses voisines se reunissent chaque fois sur la couche de recouvrement (1), caractérisée par le fait qu'entre ces traverses de paroi (3b) qui se réunissent et les traverses de paroi correspondantes (3c) de la couche de plaque suivante sont formées d'autres chambres creuses (5, 7) similaires à des canaux, s'étendant sur les deux couches de plaque.

4. Couverture de toit selon l'une des revendications 1 à 3, caractérisée par le fait que la couche intermédiaire (3a) et ses traverses de paroi (3b) reliées à la couche de recouvrement présentent, sur leur côté opposé à la couche de recouvrement (1), une surface agrandie, par exemple des nervures (24) ou des boutons.

5. Couverture de toit selon l'une des revendications 1 à 4, caractérisée par le fait que la couche de recouvrement d'un élément de construction présente à un bord longitudinal un lobe de recouvrement (20) muni de lèvres d'étanchéité parallèles (21) à la face inférieure et à l'autre bord longitudinal, dans la face supérieure, plusieurs cannelures parallèles (22) dans lesquelles s'engagent les lèvres d'étanchéité (21) du lobe de recouvrement (20) d'un élément de construction adjacent.

Fig.1

0 086 366

Fig.2

Fig.3

13    2    19    26    23    26    13

20

Fig.4

0 086 366

Fig.5

Fig.6